(19) Europäisches Patentamt / European Patent Office / Office européen des brevets

(11) **EP 4 507 035 A1**

(12) **EUROPEAN PATENT APPLICATION**
published in accordance with Art. 153(4) EPC


(43) Date of publication:
**12.02.2025 Bulletin 2025/07**

(21) Application number: **23890478.3**

(22) Date of filing: **18.10.2023**

(51) International Patent Classification (IPC):
***H01M 4/525*** (2010.01) ***H01M 10/0567*** (2010.01)
***H01M 4/62*** (2006.01) ***H01M 10/0525*** (2010.01)
***H01M 10/42*** (2006.01)

(52) Cooperative Patent Classification (CPC):
**H01M 4/525; H01M 4/62; H01M 10/0525; H01M 10/0567; H01M 10/42;** Y02E 60/10

(86) International application number:
**PCT/CN2023/125225**

(87) International publication number:
**WO 2024/104041 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022 CN 202211449329**



(71) Applicant: **Zhuhai CosMX Battery Co., Ltd.**
**Zhuhai, Guangdong 519180 (CN)**

(72) Inventors:
- **ZENG, Changan**
  **Zhuhai, Guangdong 519180 (CN)**
- **WANG, Hai**
  **Zhuhai, Guangdong 519180 (CN)**
- **LI, Suli**
  **Zhuhai, Guangdong 519180 (CN)**
- **LI, Junyi**
  **Zhuhai, Guangdong 519180 (CN)**

(74) Representative: **Murgitroyd & Company**
**Murgitroyd House**
**165-169 Scotland Street**
**Glasgow G5 8PL (GB)**


(54) **BATTERY**


(57) Disclosed is a battery. The battery includes a positive electrode material with a complete crystalline structure. The positive electrode material meets $1.3 \leq I_{003}/I_{104} \leq 3$, $0.02 \leq I_{006}/I_{003} \leq 0.15$, and $0.06 \leq I_{006}/I_{104} \leq 0.15$. The battery further includes an electrolyte solution, the electrolyte solution includes a first additive, the first additive includes a nitrile compound, and the electrolyte solution meets the following relational expression: $3\% \leq B \leq 6\%$, where B is a percentage of a mass of the nitrile compound in a total mass of the electrolyte solution. The positive electrode material has high crystallization integrity, a layered structure thereof has good stability, and a high degree of order is achieved in terms of the ion arrangement of cations (lithium ions and cobalt ions). The positive electrode material has high thermal stability, which is conducive to improving a hot box pass rate of the battery. Moreover, the positive electrode material has high structural stability and a relatively stable interface under high-voltage and full-electricity conditions, which is conducive to improving high temperature storage performance and cycling performance of the battery.


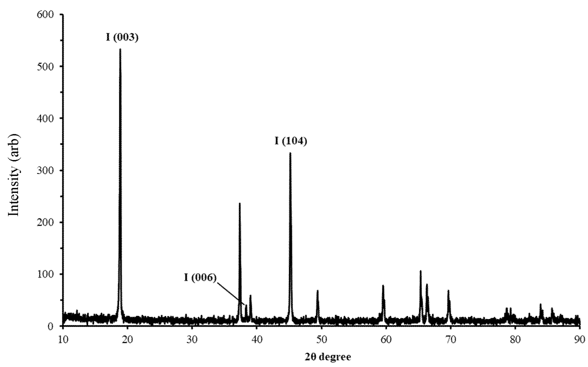


FIG. 1

EP 4 507 035 A1

## Description

### TECHNICAL FIELD

The present disclosure pertains to the field of lithium-ion battery technologies, and in particular, to a lithium-ion battery including a positive electrode material with a complete crystalline structure and an electrolyte solution.

### BACKGROUND

Since lithium-ion batteries have been commercialized, they are widely used in fields such as digital field, energy storage, power, military aerospace, and communications devices because of their advantages such as lightness and convenience, high specific energy, memory-free effect, and good cycling performance. With widespread application of lithium-ion batteries, consumers impose higher requirements on performance such as energy density, cycle life, high temperature performance, and safety of lithium-ion batteries.

As people's living standards get increasingly high, increasingly high requirements are imposed on energy density and safety performance of batteries. On the one hand, energy density may be increased by increasing a voltage of a positive electrode, and on the other hand, a negative electrode with a higher capacity per gram may be used, for example, a silicon negative electrode is introduced. However, increasing the voltage of the positive electrode may lead to problems such as deterioration of high temperature cycling performance of batteries, deterioration of the stability of a positive electrode interface, and deterioration of safety performance of a hot box.

### SUMMARY

To improve a problem that high temperature cycling performance of a battery deteriorates and a heat box pass rate is low due to oxidation and decomposition of an electrolyte solution at a high voltage and deterioration of the stability of a positive electrode interface, the present disclosure provides a battery. Through optimization of a crystalline structure (for example, a ratio of peak intensity of XRD characteristic diffraction peaks of a positive electrode material) of a positive electrode material in a positive electrode plate of the battery and composition of an electrolyte solution, normal temperature storage performance, cycling performance, and a hot box pass rate of the battery can be significantly improved.

The present disclosure is implemented by using the following technical solution.

A battery, where the battery includes a positive electrode plate, the positive electrode plate includes a positive electrode material, and the positive electrode material meets the following relationships:

$$1.3 \leq I_{003}/I_{104} \leq 3,\ 0.02 \leq I_{006}/I_{003} \leq 0.15,\ \text{and}\ 0.06 \leq I_{006}/I_{104} \leq 0.15;$$

where $I_{003}$ is intensity of a characteristic diffraction peak of a (003) crystal plane that is obtained from an XRD diffraction peak of a powder sample of the positive electrode material, $I_{104}$ is intensity of a characteristic diffraction peak of a (104) crystal plane that is obtained from the XRD diffraction peak of the powder sample of the positive electrode material, and $I_{006}$ is intensity of a characteristic diffraction peak of a (006) crystal plane that is obtained from the XRD diffraction peak of the powder sample of the positive electrode material.

In some implementations, after an XRD diffraction ray test, a characteristic peak of the (003) crystal plane of the powder sample of the positive electrode material appears at an angle of $2\theta$ = 18° to 20°, a characteristic peak of the (104) crystal plane appears at an angle of $2\theta$ = 44° to 46°, and a characteristic peak of the (006) crystal plane appears at an angle of $2\theta$ = 38° to 40°.

In some preferred implementations, the positive electrode material meets the following relationships:

$$1.6 \leq I_{003}/I_{104} \leq 3,\ 0.055 \leq I_{006}/I_{003} \leq 0.15,\ \text{and}\ 0.10 \leq I_{006}/I_{104} \leq 0.15.$$

Intensity of characteristic diffraction peaks of the (003) crystal plane, the (104) crystal plane, and the (006) crystal plane of the powder sample of the positive electrode material falls within the foregoing preferred range, so that normal temperature storage performance, cycling performance, and a hot box pass rate of the battery can be significantly improved.

The battery includes an electrolyte solution, the electrolyte solution includes a first additive, the first additive includes a nitrile compound, and the electrolyte solution meets the following relational expression:

$$3\% \leq B \leq 6\%;$$

where B is a percentage of a mass of the nitrile compound in a total mass of the electrolyte solution.

When the percentage of the mass of the nitrile compound in the total mass of the electrolyte solution falls within the foregoing range, the nitrile compound can better protect a positive electrode interface, reduce interface impedance while stabilizing transition metal ions on the interface, and facilitate deintercalation of lithium ions, thereby improving normal temperature and high temperature cycling performance and high temperature storage performance of the battery, and reducing a failure risk caused by Joule heat caused by a safety test such as a hot box.

According to an implementation of the present disclosure, B is 3%, 3.2%, 3.5%, 4%, 4.5%, 5%, 5.5%, or 6%.

According to an implementation of the present disclosure, $I_{003}/I_{104}$ is 1.3, 1.4, 1.5, 1.6, 1.7, 1.8, 1.9, 2.0, 2.1, 2.2, 2.3, 2.4, 2.5, 2.6, 2.7, 2.8, 2.9, or 3.

According to an implementation of the present disclosure, $I_{006}/I_{003}$ is 0.02, 0.03, 0.04, 0.05, 0.06, 0.07, 0.08, 0.09, 0.10, 0.11, 0.12, 0.13, 0.14, or 0.15.

According to an implementation of the present disclosure, $I_{006}/I_{104}$ is 0.06, 0.07, 0.08, 0.09, 0.10, 0.11, 0.12, 0.13, 0.14, or 0.15.

It is found through research that, when the intensity of the characteristic diffraction peak of the (003) crystal plane that is obtained from the XRD diffraction peak of the powder sample of the positive electrode material, the intensity of the characteristic diffraction peak of the (104) crystal plane, and the intensity of the characteristic diffraction peak of the (006) crystal plane meet $1.3 \leq I_{003}/I_{104} \leq 3$, $0.02 \leq I_{006}/I_{003} \leq 0.15$, and $0.06 \leq I_{006}/I_{104} \leq 0.15$, it indicates that the positive electrode material has high crystallization integrity, a layered structure thereof has good stability, and a high degree of order is achieved in terms of the ion arrangement of cations (lithium ions and cobalt ions). The positive electrode material has high thermal stability, which is conducive to improving a hot box pass rate of the battery. Moreover, the positive electrode material has high structural stability and a relatively stable interface under high-voltage and full-electricity conditions, which is conducive to improving high temperature storage performance and normal temperature and high temperature cycling performance of the battery.

According to an implementation of the present disclosure, the positive electrode material is a positive electrode material doped and/or coated with modified lithium cobalt oxide. By doping and/or coating lithium cobalt oxide, the lithium cobalt oxide can be modified to improve the structural stability of the positive electrode material.

According to an implementation of the present disclosure, Dv50 of the positive electrode material ranges from 12 $\mu$m to 20 $\mu$m, for example, is 12 $\mu$m, 13 $\mu$m, 14 $\mu$m, 15 $\mu$m, 16 $\mu$m, 17 $\mu$m, 18 $\mu$m, 19 $\mu$m, or 20 $\mu$m. Dv50 of the positive electrode material may be tested by using a laser particle size analyzer. Dv50 refers to a particle size at which a percentage of cumulative volume in particle size distribution of a sample reaches 50%.

When Dv50 of the positive electrode material falls within the foregoing range, a capacity of the battery is improved, press density is improved, energy density of the battery is improved, and room temperature cycling performance and high temperature cycling performance of the battery are improved.

According to an implementation of the present disclosure, a chemical formula of the positive electrode material is $Li_XCo_{1-y}M_yO_2$, where $0.9 \leq x \leq 1.1$, $0 \leq y \leq 0.1$, and M is selected from at least one of Al, Mg, Ti, Zr, Co, Ni, Mn, Y, La, Sr, W, Sc, Ta, or Nb.

According to an implementation of the present disclosure, the doping and/or coating method may be a method known in the art, for example, solid-phase sintering is performed after a lithium cobalt oxide precursor is mixed with a compound or a coating including a doped element.

According to an implementation of the present disclosure, a surface of the positive electrode material is coated with a coating, a thickness of a coating layer formed by the coating is less than or equal to 50 nm, and a mass proportion of the coating is less than or equal to 5%, that is, the mass of the coating accounts for 5% or less of a total mass of the positive electrode material, for example, may be 0.5%, 1%, 1.5%, 2%, 2.5%, 3%, 3.5%, or 4%. The coating includes one or more of $Al_2O_3$, $TiO_2$, $ZrO_2$, MgO, $CoO_2$, CoO, NiO, $MnO_2$, $Mn_3O_4$,$NbO_3$, $Ta_2O_5$, $AlF_3$, $MgF_2$, $AlPO_3$, or $Li_3PO_3$. The surface of the positive electrode material is coated with a coating layer, which can be bonded to transition metal on the surface of the positive electrode material to stabilize the transition metal, reduce side reactions between the transition metal and the electrolyte solution, and improve cycling performance, storage performance, and the like of the battery.

According to an implementation of the present disclosure, the electrolyte solution further includes an organic solvent, and the organic solvent is selected from one or more of cacrbonic acid ester and/or carboxylic acid ester.

For example, the cacrbonic acid ester is selected from one or more of the following fluorinated or unsubstituted solvents: ethylene carbonate, propylene carbonate, dimethyl carbonate, diethyl carbonate, or ethyl methyl carbonate.

For example, the carboxylic acid ester is selected from one or more of the following fluorinated or unsubstituted solvents: ethyl acetate, propyl acetate, n-butyl acetate, isobutyl acetate, n-amyl acetate, isoamyl acetate, ethyl propionate, propyl propanoate, methyl butyrate, or ethyl butyrate.

According to an implementation of the present disclosure, the nitrile compound includes a dinitrile compound and a trinitrile compound. For example, the dinitrile compound is selected from a group consisting of the following:

succinonitrile, glutaronitrile, adiponitrile, 1,5-dicyanopentane, 1,6-dicyanohexane, 1,7-dicyanoheptane, 1,8-diisocyanatooctane, 1,9-dicyanononane, 1,10-dicyanodecane, 1,12-dicyanododecane, tetramethylsuccinonitrile, 2-methylpentanedinitrile, 2,4-dimethylvaleronitrile, 2,2,4,4-tetramethylpentanedinitrile, 1,4-dicyanopentane, 2,6-dicyanoheptane, 2,7-diisocyanatooctane, 2,8-dicyanononane, 1,6-dicyanodecane, 1,2-dicyanobenzene, 1,3-dicyanobenzene, 1,4-dicyanobenzene, 3,5-dioxa-pimelonitrile, 1,4-bis(cyanoethoxy)butane, ethylene glycol bis(2-cyanoethyl)ether, diethylene glycol bis(2-cyanoethyl)ether, triethylene glycol bis(2-cyanoethyl)ether, tetraethylene glycol bis(2-cyanoethyl)ether, 3,6,9,12,15,18-hexaoxaicosane, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, or any combination thereof. For example, the trinitrile compound is selected from a group consisting of the following: 1,3,5-pentane tricarbonitrile, 1,2,3-propane tricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, 1,2,5-tris(cyanoethoxy)pentane, or any combination thereof.

According to an implementation of the present disclosure, the nitrile compound is selected from at least one of succinonitrile, glutaronitrile, adiponitrile, pimelonitrile, octandinitril, sebaconitrile, 1,3,6-hexanetricarbonitrile, 3-methoxypropionitrile, glycerol trinitrile, or 1,2-bis(2-cyanoethoxy)ethane.

According to an implementation of the present disclosure, the first additive includes adiponitrile, and the electrolyte solution meets the following relational expression:

$$0.5\% \leq A \leq 3\%;$$

where A is a percentage of a mass of the adiponitrile in the total mass of the electrolyte solution.

According to an implementation of the present disclosure, Ais 0.5%, 1%, 1.5%, 2%, 2.5%, or 3%.

According to an implementation of the present disclosure, the electrolyte solution further includes a second additive, and the second additive is selected from at least one of compounds shown in Formula 1:

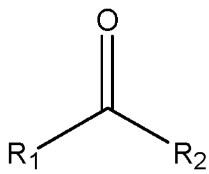 Formula 1;

where $R_1$ and $R_2$ are the same or different, and are independently selected from a 5- to 12-membered heteroaromatic group.

According to an implementation of the present disclosure, $R_1$ and $R_2$ are the same or different, and are independently selected from a 5- to 6-membered heteroaromatic group.

According to an implementation of the present disclosure,$R_1$ and $R_2$ are the same or different, and are independently selected from a pyrrolyl group

( 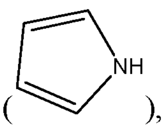 ),

a pyrazolyl group

( 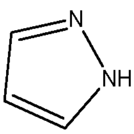 ),

an imidazolyl group

(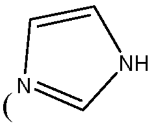),

a pyridyl group

(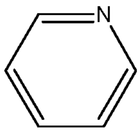),

a dazyl group

(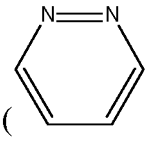),

or a pyrimidinyl group

(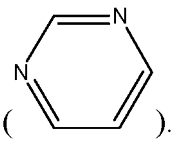).

A compound of the second additive may be purchased, or may be obtained from a conventional preparation method in the art.

According to an implementation of the present disclosure, the second additive includes a compound shown by A1:

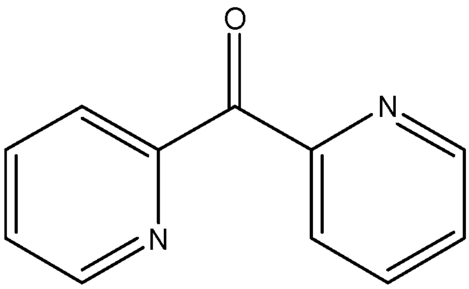

A1.

According to an implementation of the present disclosure, a percentage of a mass of the second additive in the total mass of the electrolyte solution ranges from 0.1 wt% to 3 wt%, for example, is 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.1 wt%, 1.2 wt%, 1.3 wt%, 1.4 wt%, 1.5 wt%, 1.6 wt%, 1.7 wt%, 1.8 wt%, 1.9 wt%, 2 wt%, 2.2 wt%, 2.4 wt%, 2.5 wt%, 2.6 wt%, 2.8 wt%, or 3 wt%.

According to an implementation of the present disclosure, the electrolyte solution further includes a third additive, and the third additive is selected from one or more of vinylene carbonate, vinyl ethylene carbonate, fluoroethylene carbonate, ethylene sulphite, methylene methane disulfonate, ethylene sulfate, 1,3-propane sultone, or prop-1-ene-1,3-sultone.

According to an implementation of the present disclosure, a percentage of a mass of the third additive in the total mass of the electrolyte solution ranges from 0.1 wt% to 15.0 wt%, for example, is 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.1 wt%, 1.2 wt%, 1.3 wt%, 1.4 wt%, 1.5 wt%, 1.6 wt%, 1.7 wt%, 1.8 wt%, 1.9 wt%, 2 wt%, 2.2 wt%, 2.4 wt%, 2.5 wt%, 2.6 wt%, 2.8 wt%, 3 wt%, 3.3 wt%, 3.5 wt%, 3.8 wt%, 4 wt%, 4.2 wt%, 4.5 wt%, 4.8 wt%, 5 wt%, 6 wt%, 7 wt%, 8 wt%, 9 wt%, 10 wt%, 11 wt%, 12 wt%, 13 wt%, 14 wt%, or 15 wt%.

According to an implementation of the present disclosure, the electrolyte solution further includes lithium salts, and the lithium salts are selected from one, two, or more of lithium hexafluorophosphate, lithium difluorophosphate, lithium

difluoro(oxalato)borate, lithium bis(fluorosulfonyl)imide, lithium bis(trifluoromethanesulphonyl)imide, lithium difluorobis(oxalato)phosphate, lithium tetrafluoroborate, lithium bis(oxalate)borate, lithium hexafluoroantimonate, lithium hexafluoroarsenate, lithium bis(trifluoromethylsulfonyl)imine, lithium bis(pentafluoroethylsulfonyl)imine, lithium tris(trifluoromethanesulfonyl)methyl, or lithium bis(trifluoromethyl sulfonyl)imine.

According to an implementation of the present disclosure, a percentage of a mass of the lithium salts in the total mass of the electrolyte solution ranges from 10 wt% to 20 wt%, for example, 10 wt%, 12 wt%, 14 wt%, 15 wt%, 16 wt%, 18 wt%, or 20 wt%. If content of the lithium salts is controlled within the foregoing range, problems such as reduced conductivity of the electrolyte solution, high impedance of the battery, and poor cycling performance due to insufficient addition of lithium salts can be avoided, and problems such as high viscosity of the electrolyte solution, reduced conductivity, poor thermal stability of the battery, and excessive thickness expansion during cycling of the battery due to addition of excessive lithium salts can also be avoided.

According to an implementation of the present disclosure, the battery further includes a separator and a negative electrode plate including a negative electrode material.

According to an implementation of the present disclosure, the negative electrode material is selected from one or more of a carbon material, metal bismuth, lithium metal, nitride, magnesium-based alloy, indium-based alloy, a boron-based material, a silicon-based material, a tin-based material, an antimony-based alloy, a gallium-based alloy, a germanium-based alloy, an aluminum-based alloy, a lead-based alloy, a zinc-based alloy, titanium oxide, nano-transition metal oxide (where M is Co, Ni, Cu, or Fe), iron oxide, chromium oxide, molybdenum oxide, or phosphide.

According to an implementation of the present disclosure, an operation cut-off voltage of the battery is greater than or equal to 4.48 V.

When the positive electrode material provided in the present disclosure meets $1.3 \leq I_{003}/I_{104} \leq 3$, $0.02 \leq I_{006}/I_{003} \leq 0.15$, and $0.06 \leq I_{006}/I_{104} \leq 0.15$, the positive electrode material has high crystallization integrity, a layered structure thereof has good stability, and a high degree of order is achieved in terms of the ion arrangement of cations (for example, lithium ions and cobalt ions). The positive electrode material has high structural stability and a relatively stable interface under high-voltage and full-electricity conditions. In addition, the battery in the present disclosure can operate at a high voltage.

Beneficial effects of the present disclosure are as follows:

A battery is disclosed in the present disclosure. The battery includes a positive electrode material with a complete crystalline structure. The positive electrode material meets $1.3 \leq I_{003}/I_{104} \leq 3$, $0.02 \leq I_{006}/I_{003} \leq 0.15$, and $0.06 \leq I_{006}/I_{104} \leq 0.15$, which indicates that the positive electrode material has high crystallization integrity, a layered structure thereof has good stability, and a high degree of order is achieved in terms of the ion arrangement of cations (lithium ions and cobalt ions). The positive electrode material has high thermal stability, which is conducive to improving a hot box pass rate of the battery. Moreover, the positive electrode material has high structural stability and a relatively stable interface under high-voltage and full-electricity conditions, which is conducive to improving high temperature storage performance and normal temperature and high temperature cycling performance of the battery. Based on this, in combination with an electrolyte solution containing a nitrile compound, especially an electrolyte solution containing adiponitrile, the nitrile compound can be bonded to high-valence cobalt ions on a positive electrode interface, thereby reducing an oxidative catalytic effect of the high-valence cobalt ions on the electrolyte solution. This helps improve a hot box pass rate of the battery. In addition, an amount of added nitrile compounds is controlled, so that the nitrile compounds can better protect the positive electrode interface, reduce interface impedance while stabilizing transition metal ions on the interface, and facilitate deintercalation of lithium ions, thereby improving normal temperature and high temperature cycling performance and high temperature storage performance of the battery, and reducing a failure risk caused by Joule heat caused by a safety test such as a hot box.

Further, through addition of the second additive, stable low-impedance SEI films can be simultaneously formed on both the positive electrode interface and a negative electrode interface, the stability of the positive electrode interface and the negative electrode interface is improved, the dissolution of transition metal ions is reduced, oxidative decomposition of the electrolyte solution by high-valence cobalt is reduced, damage caused by the dissolution of transition metal ions to the SEI film on the negative electrode is reduced, heat generated by redox is reduced, and Joule heat is reduced. Therefore, high temperature storage performance, cycling performance, and safety performance of the battery are improved.

Further, the battery has excellent high temperature storage performance, cycling performance, and hot box safety performance through a synergistic effect between the positive electrode material and composition of the electrolyte solution in the battery.

## BRIEF DESCRIPTION OF THE DRAWINGS

FIG. 1 shows an XRD spectra of positive electrode materials in Comparative Example 1.

FIG. 2 shows an XRD spectra of positive electrode materials in Example 1.

## DETAILED DESCRIPTION OF THE EMBODIMENTS

The following further describes in detail the present disclosure with reference to specific examples. It should be understood that the following examples are merely for example descriptions and intended to explain the present disclosure and shall not be construed as a limitation on the protection scope of the present disclosure. All technologies achieved based on the foregoing content of the present disclosure are included in the protection scope of the present disclosure.

Experimental methods used in the following examples are all conventional methods, unless otherwise specified. Reagents, materials, and the like used in the following examples are all commercially available, unless otherwise specified.

Comparative Example 1

(1) Preparation of positive electrode plates

(i) Weighing lithium carbonate and $Co_3O_4$ precursors according to a molar ratio of Li:Co = 103:99.5, calcining the lithium carbonate and $Co_3O_4$ precursors in a muffle furnace at 1030°C for 8 hours, and pulverizing the calcined product to obtain $LiCoO_2$ with particle Dv50 being 15.5 μm.

(ii) Uniformly mixing prepared lithium cobalt oxide with titanium dioxide according to a molar ratio of Co:Ti = 98.8:0.2 by stirring, calcining the mixture in a muffle furnace at 900°C for 8 hours, and pulverizing the calcined product to obtain a positive electrode active material $Li_{1.03}Co_{0.988}Ti_{0.002}O_2$ of the lithium cobalt oxide.

The foregoing positive electrode material $Li_{1.03}Co_{0.988}Ti_{0.002}O_2$, a binder, that is, polyvinylidene fluoride (PVDF), and a conductive agent, that is, acetylene black were mixed at a weight ratio 98:1.5:0.5, and added into N-methylpyrrolidone (NMP). The mixture was stirred under action of a vacuum mixer until a mixed system became a uniform and liquid positive electrode slurry. The positive electrode slurry was evenly coated on aluminum foil with a thickness of 12 μm. The coated aluminum foil was baked in an oven with five different temperatures, and was dried in an oven at 120°C for 8 hours, followed by roll-pressing and cutting, to obtain a positive electrode plate.

(2) Preparation of negative an electrode plate

A negative electrode active material graphite, a thickener, that is, sodium carboxymethyl cellulose (CMC-Na), a binder, that is, styrene-butadiene rubber, and a conductive agent, that is, acetylene black, were mixed at a weight ratio of 97:1:1:1, and added into deionized water. The mixture was stirred under action of a vacuum mixer to obtain a negative electrode slurry. The negative electrode slurry was evenly coated on copper foil with a thickness of 8 μm. The copper foil was dried at room temperature, and then transferred to an oven and dried at 80°C for 10 hours, followed by cold pressing and cutting, to obtain a negative electrode plate.

(3) Preparation of an electrolyte solution

Ethylene carbonate, propylene carbonate, and propyl propanoate were evenly mixed at a mass ratio of 15:10:75 in a glove box filled with argon gas and with a qualified water content and oxygen content (a solvent and an additive should be normalized together), the solvent was frozen at low temperature of about -10°C for 2 hours to 5 hours, and then quickly added with fully dried lithium hexafluorophosphate (LiPF6) of 14.5 wt%. The mixture was evenly stirred, added with fluoroethylene carbonate of 7 wt%, 1,3-propane sultone of 3.5 wt%, succinonitrile of 1.5 wt%, and glycerol trinitrile of 2.5 wt%, and then were stirred again until uniform. The electrolyte solution in Comparative Example 1 was obtained after passing water content and free acid tests.

(4) Preparation of a separator

A polyethylene separator with a thickness of 8 μm was used (from AsahiKASEI Corporation).

(5) Preparation of a lithium-ion battery

The positive electrode plate, the separator, and the negative electrode plate prepared above were sequentially stacked, to ensure that the separator was located between the positive electrode plate and the negative electrode plate for separation. Then, winding was performed to obtain an unfilled bare cell. The bare cell was placed in outer packaging foil. The electrolyte solution prepared above was injected into the dried bare cell. After processes such as vacuum packaging, standing, forming, shaping, and sorting, the required lithium-ion battery was obtained.

(6) Test of XRD of powders of a positive electrode material

Positive material sample powders were taken, and XRD of the powders was tested (as shown in FIG. 1, a horizontal coordinate 2θ degree means a 2θ angle). Based on intensity of corresponding diffraction peaks, ratios among intensity of $I_{003}$ peak, $I_{104}$ peak, and $I_{006}$ peak were separately calculated. A test result indicates intensity of diffraction peaks $I_{003}$, $I_{104}$, and $I_{006}$ meets the following: $I_{003}/I_{104}$ = 1.2, $I_{006}/I_{003}$ = 0.015, and $I_{006}/I_{104}$ = 0.018. A voltage system of a corresponding battery is 4.48 V.

(7) 25°C normal temperature cycling test

Before the test, a thickness $D_0$ of a fully charged cell was measured. A battery is placed in an environment of (25±3)°C for 3 hours. When a cell body reached (25±3)°C, the battery was first charged to 4.2 V at 1C, then charged to 4.48 V at 0.7C, and then charged at a constant voltage of 4.48 V to a cut-off current of 0.05C. After that, the battery was discharged to 3 V at 0.5C, and an initial capacity $Q_0$ was recorded. When cycles reached a required number of times, a discharge capacity obtained in this case was used as a capacity $Q_2$ of the battery to calculate a capacity retention rate (%). After that, the battery was fully charged and then the cell was taken out and was stood in normal temperature for 3 hours, to measure a thickness $D_2$ in a fully charged state, and calculate a thickness change rate (%). The results are shown in Table 2. Calculation formulas used are as follows.

Thickness change rate (%) = $(D_2 - D_0)/D_0 \times 100\%$; and Capacity retention rate (%) = $Q_2/Q_0 \times 100\%$.

(8) 45°C high temperature cycling test

Before the test, a thickness $D_0$ of a fully charged cell was measured. A battery is placed in an environment of (45±3)°C for 3 hours. When a cell body reached (45±3)°C, the battery was charged to 4.48 V at a constant current of 0.7C, and then charged at a constant voltage of 4.48 V to a cut-off current of 0.05C. After that, the battery was discharged at 0.5C, and an initial capacity $Q_0$ was recorded. The cycle was repeated in this way. When cycles reached a required number of times, a discharge capacity obtained in this case was used as a capacity $Q_3$ of the battery to calculate a capacity retention rate (%). After that, the battery was fully charged and then the cell was taken out and was stood in normal temperature for 3 hours, to measure a thickness D3 in a fully charged state, and calculate a thickness change rate (%). The results are shown in Table 2. Calculation formulas used are as follows.

Thickness change rate (%) = $(D_3 - D_0)/D_0 \times 100\%$; and Capacity retention rate (%) = $Q_3/Q_0 \times 100\%$.

(9) 60°C high temperature storage test

A thickness $D_0$ of a fully charged cell was measured at 25°C. A battery obtained after sorting was charged to 4.48 V at 0.7C, then charged at a constant voltage of 4.48 V to a cut-off current of 0.05C, and then discharged to 3.0 V at a constant current of 0.5C. After that, the battery is charged to 4.48 V at 0.7C, and charged at a constant voltage of 4.48 V to a cut-off current of 0.05C. After the battery was stood in an environment of 60°C for 35 days, a thickness $D_5$ in a fully charged state was measured, and a thickness change rate (%) was calculated. The results are shown in Table 2. A calculation formula used is as follows: Thickness change rate (%) = $(D_5 - D_0)/D_0 \times 100\%$.

(10) Hot box test

At 25°C, a battery was charged to 4.2 V at 1C, then charged to 4.48 V at 0.7C, and then charged at a constant voltage of 4.48 V to a cut-off current of 0.05C. The battery was placed in a hot box, and a temperature was increased to 132°C at a rate of 5±2 °C/min, and was kept in 132°C for 60 min. If the battery is not on fire and is not exploded, the hot box test succeeds.

Examples 1 to 7 and Comparative Examples 2 to 8

Processes for preparing the battery in Examples 1 to 7 and Comparative Examples 2 to 8 are the same as that in Comparative Example 1. Differences lie in composition of positive electrode materials, differences in terms of modified processes, and differences in terms of components and content of electrolyte solutions. This is specifically as follows: Method for preparing a positive electrode material in Example 1.

(i) Weighing lithium carbonate and $Co_3O_4$ precursors according to a molar ratio of Li:Co = 103:99.5, weighing aluminum oxide and magnesium oxide according to a molar ratio of Co:Al:Mg = 98.8:1:0.2, uniformly mixing them by stirring, calcining the mixture in a muffle furnace at 1030°C for 8 hours, and pulverizing the calcined product to obtain $LiCo_{0.988}Al_{0.01}Mg_{0.002}O_2$ with particle Dv50 being 15.5 μm.

(ii) Uniformly mixing $LiCo_{0.988}Al_{0.01}Mg_{0.002}O_2$ with titanium dioxide according to a molar ratio of Co:Ti = 98.6:0.2 by stirring, calcining the mixture in a muffle furnace at 900°C for 8 hours, and pulverizing the calcined product to obtain a positive electrode active material $Li_{1.03}Co_{0.986}Al_{0.01}Mg_{0.002}Ti_{0.002}O_2$ of lithium cobalt oxide. An XRD spectra is shown in FIG. 2.

Method for preparing a positive electrode material in Example 2.

The method for preparing a positive electrode material in Example 2 is the same as that in Example 1, and a difference lies in that calcining time in step (i) is 9 hours.

Method for preparing a positive electrode material in Example 3.

The method for preparing a positive electrode material in Example 3 is the same as that in Example 1, and a difference lies in that calcining temperature in step (i) is 1050°C and calcining time is 10 hours.

Method for preparing a positive electrode material in Example 8.

The method for preparing a positive electrode material in Example 8 is the same as that in Example 1, and a difference lies in that a coating $Al_2O_3$ is coated on a surface of the positive electrode material, a thickness of a coating layer formed by the coating is approximately 30 nm, and a mass proportion of the coating is approximately 3%.

Example 9

Same as Example 7. A difference lies in that a compound

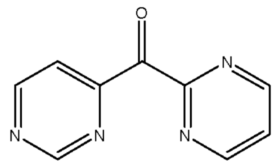

of an equal quantity instead of the compound shown by A1 is used as the second additive in the electrolyte solution.

Example 10

Same as Example 7. A difference lies in that a compound

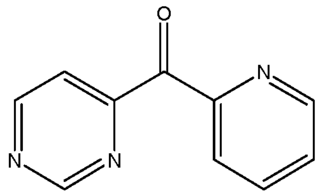

of an equal quantity instead of the compound shown by A1 is used as the second additive in the electrolyte solution.

Example 11

Same as Example 7. A difference lies in that the third additive in the electrolyte solution is vinylene carbonate of 7 wt%, ethylene sulfate of 2.5 wt%, and prop-1-ene-1,3-sultone of 1 wt%.

Example 12

Same as Example 7. A difference lies in that the third additive in the electrolyte solution is fluoroethylene carbonate of 9 wt% and 1,3-propane sultone of 4 wt%.

Method for preparing a positive electrode material in Comparative Example 2.

The method for preparing a positive electrode material in Comparative Example 2 is the same as that in Comparative Example 1, and a difference lies in that calcining time in step (i) is 10 hours.

Method for preparing a positive electrode material in Comparative Example 3.

The method for preparing a positive electrode material in Comparative Example 3 is the same as that in Comparative Example 1, and a difference lies in that calcining temperature in step (i) is 1040°C and calcining time is 8.5 hours.

Specific composition of positive electrode materials with different diffraction peaks and electrolyte solutions is shown in the following table 1. The test results are listed in Table 2.

Table 1 Composition and content of the positive electrode material and the electrolyte solution of Examples 1 to 20 and Comparative Examples 1 to 8

| | $I_{003}/I_{104}$ | $I_{006}/I_{003}$ | $I_{006}/I_{104}$ | Succinonitrile | Adiponitrile | Glycerol trinitrile | 1,3,6-hexanetricarbonitrile | Compound shown by A1 |
|---|---|---|---|---|---|---|---|---|
| Comparative Example 1 | 1.200 | 0.015 | 0.018 | 1.5 | / | 2.5 | / | / |
| Comparative Example 2 | 1.532 | 0.030 | 0.046 | 1.5 | / | 2.5 | / | / |
| Comparative Example 3 | 1.254 | 0.045 | 0.056 | 1.5 | / | 2.5 | / | / |

(continued)

| | $I_{003}/I_{104}$ | $I_{006}/I_{003}$ | $I_{006}/I_{104}$ | Succinonitrile | Adiponitrile | Glycerol trinitrile | 1,3,6-hexanetricarbonitrile | Compound shown by A1 |
|---|---|---|---|---|---|---|---|---|
| Comparative Example 4 | 1.200 | 0.015 | 0.018 | 1.5 | 1 | 2.5 | / | / |
| Comparative Example 5 | 1.200 | 0.015 | 0.018 | 1.5 | 1 | / | 2.5 | / |
| Comparative Example 6 | 1.200 | 0.015 | 0.018 | 1.5 | 1 | 2.5 | / | 0.5 |
| Comparative Example 7 | 1.352 | 0.051 | 0.069 | 1.5 | / | 1 | / | / |
| Comparative Example 8 | 1.352 | 0.051 | 0.069 | 1.5 | 2 | 3.5 | / | / |
| Example 1 | 1.352 | 0.051 | 0.069 | 1.5 | / | 2.5 | / | / |
| Example 2 | 1.561 | 0.043 | 0.067 | 1.5 | / | 2.5 | / | / |
| Example 3 | 2.012 | 0.065 | 0.131 | 1.5 | / | 2.5 | / | / |
| Example 4 | 1.352 | 0.051 | 0.069 | 1.5 | 1 | 2.5 | / | / |
| Example 5 | 1.352 | 0.051 | 0.069 | 1.5 | 2 | 2.5 | / | / |
| Example 6 | 1.352 | 0.051 | 0.069 | 1.5 | 1 | / | 2.5 | / |
| Example 7 | 1.352 | 0.051 | 0.069 | 1.5 | 1 | 2.5 | / | 0.5 |
| Example 13 | 1.352 | 0.051 | 0.069 | 1 | 0.5 | 2 | 1.5 | 0.5 |
| Example 14 | 1.352 | 0.051 | 0.069 | 0.5 | 3 | 1 | 0.5 | 0.5 |
| Example 15 | 1.352 | 0.051 | 0.069 | 2 | 0.1 | 2.5 | 0.4 | 0.5 |
| Example 16 | 1.352 | 0.051 | 0.069 | 0 | 5 | 0 | 0 | 0.5 |
| Example 17 | 1.352 | 0.051 | 0.069 | 1.5 | 1 | 2.5 | / | 0.1 |
| Example 18 | 1.352 | 0.051 | 0.069 | 1.5 | 1 | 2.5 | / | 3 |
| Example 19 | 1.352 | 0.051 | 0.069 | 1.5 | 1 | 2.5 | / | 2 |
| Example 20 | 1.352 | 0.051 | 0.069 | 1.5 | 1 | 2.5 | / | 5 |

It can be learned from Table 2 that, all batteries prepared in the examples of the present disclosure achieve better electrical performance. Test results from the hot box test for the battery, an amplitude of improvements to a capacity retention rate and a thickness expansion rate of the cycling performance, and a storage process can prove a synergistic effect between a lithium cobalt oxide positive electrode using a complete crystalline structure and the electrolyte solution in the present disclosure. Specific analysis is described as follows.

Table 2 Comparison between experimental results of batteries in Examples 1 to 20 and Comparative Examples 1 to 8

| | 132°C 60 min | Capacity retention rate at 25°C after 800T of cycles | Thickness expansion rate at 25°C after 800T of cycles | Capacity retention rate at 45°C after 500T of cycles | Thickness expansion rate at 45°C after 500T of cycles. | Thickness expansion rate at 60°C after 35D of storage |
|---|---|---|---|---|---|---|
| Comparative Example 1 | 2/10 PASS | 75.31% | 9.78% | 76.22% | 11.46% | 9.52% |
| Comparative Example 2 | 3/10 PASS | 76.45% | 9.65% | 78.35% | 9.86% | 8.73% |
| Comparative Example 3 | 2/10 PASS | 76.37% | 9.59% | 81.34% | 9.78% | 8.36% |

(continued)

| | 132°C 60 min | Capacity retention rate at 25°C after 800T of cycles | Thickness expansion rate at 25°C after 800T of cycles | Capacity retention rate at 45°C after 500T of cycles | Thickness expansion rate at 45°C after 500T of cycles. | Thickness expansion rate at 60°C after 35D of storage |
|---|---|---|---|---|---|---|
| Comparative Example 4 | 4/10 PASS | 75.63% | 9.73% | 78.92% | 9.82% | 8.21% |
| Comparative Example 5 | 4/10 PASS | 75.78% | 9.70% | 79.32% | 9.75% | 8.07% |
| Comparative Example 6 | 5/10 PASS | 77.33% | 9.68% | 79.82% | 9.67% | 7.83% |
| Comparative Example 7 | 1/10 PASS | 79.63% | 9.48% | 70.21% | 13.83% | 13.82% |
| Comparative Example 8 | 6/10 PASS | 73.02% | 11.39% | 85.63% | 8.56% | 4.63% |
| Example 1 | 6/10 PASS | 79.45% | 9.63% | 82.42% | 9.16% | 6.36% |
| Example 2 | 7/10 PASS | 79.69% | 9.51% | 81.62% | 9.36% | 7.52% |
| Example 3 | 7/10 PASS | 79.85% | 9.24% | 84.45% | 9.03% | 5.73% |
| Example 4 | 8/10 PASS | 79.25% | 9.71% | 84.64% | 8.75% | 5.32% |
| Example 5 | 9/10 PASS | 79.18% | 9.76% | 85.75% | 8.42% | 5.20% |
| Example 6 | 9/10 PASS | 79.65% | 9.68% | 84.86% | 8.72% | 5.18% |
| Example 7 | 9/10 PASS | 81.47% | 9.45% | 85.89% | 8.52% | 4.87% |
| Example 8 | 8/10 PASS | 79.66% | 9.46% | 83.85% | 8.73% | 5.13% |
| Example 9 | 8/10 PASS | 81.41% | 9.38% | 85.96% | 8.40% | 5.05% |
| Example 10 | 9/10 PASS | 81.52% | 9.26% | 86.18% | 8.31% | 4.72% |
| Example 11 | 10/10 PASS | 81.28% | 9.52% | 84.81% | 8.63% | 5.31% |
| Example 12 | 8/10 PASS | 83.24% | 9.12% | 86.97% | 8.35% | 4.53% |
| Example 13 | 7/10 PASS | 82.93% | 9.10% | 85.45% | 8.42% | 5.11% |
| Example 14 | 8/10 PASS | 81.02% | 9.23% | 83.53% | 8.51% | 5.53% |
| Example 15 | 7/10 PASS | 81.46% | 9.41% | 83.42% | 8.62% | 5.26% |
| Example 16 | 8/10 PASS | 80.02% | 9.47% | 82.34% | 9.04% | 7.56% |

(continued)

| | 132°C 60 min | Capacity retention rate at 25°C after 800T of cycles | Thickness expansion rate at 25°C after 800T of cycles | Capacity retention rate at 45°C after 500T of cycles | Thickness expansion rate at 45°C after 500T of cycles. | Thickness expansion rate at 60°C after 35D of storage |
|---|---|---|---|---|---|---|
| Example 17 | 8/10 PASS | 80.26% | 9.44% | 85.27% | 8.63% | 5.15% |
| Example 18 | 10/10 PASS | 81.43% | 9.43% | 86.37% | 8.33% | 4.53% |
| Example 19 | 9/10 PASS | 81.56% | 9.37% | 86.21% | 8.48% | 4.61% |
| Example 20 | 10/10 PASS | 79.71% | 9.46% | 87.32% | 8.21% | 4.31% |

It can be found through comparison between Examples 1 to 3 and Comparative Examples 1 to 3 (or Example 6 and Comparative Example 5, or Example 7 and Comparative Example 6) that: when the intensity of $I_{003}$, $I_{104}$, and $I_{006}$ diffraction peaks of the positive electrode material meets $1.3 \le I_{003}/I_{104} \le 3$, $0.02 \le I_{006}/I_{003} \le 0.15$, and $0.06 \le I_{006}/I_{104} \le 0.15$, and total content B of nitrile compounds meets $3\% \le B \le 6\%$, the battery has an excellent hot box pass rate, excellent normal/high temperature cycling performance, and 60°C storage performance; and when $I_{006}/I_{104}$ is properly increased within a prescribed range, 45°C high temperature cycling performance of the battery can be significantly improved. It can be found through comparison between Comparative Example 4 and Comparative Example 1 that the additive adiponitrile in the electrolyte solution can significantly improve the hot box pass rate of the battery and can further improve 45°C cycling performance and 60°C high temperature storage performance.

It can be found through Examples 4 and 5 and Example 1 that when the intensity of $I_{003}$, $I_{104}$, and $I_{006}$ diffraction peaks of the positive electrode material meets $1.3 \le I_{003}/I_{104} \le 3$, $0.02 \le I_{006}/I_{003} \le 0.15$, and $0.06 \le I_{006}/I_{104} \le 0.15$, adiponitrile is added to the electrolyte solution, and content A of the adiponitrile and total content B of nitrile compounds meet $0.5\% \le A \le 3\%$ and $3\% \le B \le 6\%$, so that the hot box pass rate, cycling performance, and 60°C high temperature storage performance of the battery can be further improved.

It can be found through comparison between Example 1 and Comparative Example 7 that, when the intensity of $I_{003}$, $I_{104}$, and $I_{006}$ diffraction peaks of the positive electrode material meets $1.3 \le I_{003}/I_{104} \le 3$, $0.02 \le I_{006}/I_{003} \le 0.15$, and $0.06 \le I_{006}/I_{104} \le 0.15$, when the total content B of the nitrile compounds in the electrolyte solution is < 3%, the hot box pass rate, 45°C high temperature cycling performance, and 60°C high temperature storage performance of the battery significantly deteriorate.

It can be found through comparison between Examples 1, 4, and 5 and Comparative Example 8 that when the intensity of $I_{003}$, $I_{104}$, and $I_{006}$ diffraction peaks of the positive electrode material meets $1.3 \le I_{003}/I_{104} \le 3$, $0.02 \le I_{006}/I_{003} \le 0.15$, and $0.06 \le I_{006}/I_{104} \le 0.15$, when the total content B of the nitrile compounds in the electrolyte solution is > 6%, normal temperature cycling performance and storage performance of the battery significantly deteriorate.

It can be found through comparison between Examples 7 and 4 and Comparative Examples 6 and 4 that, when the second additive is added to the electrolyte solution, the hot box pass rate, cycling performance, and 60°C high temperature storage performance of the battery can be further improved.

The foregoing describes the implementations of the present disclosure. However, the present disclosure is not limited to the foregoing implementations. Any modification, equivalent replacement, improvement, or the like made without departing from the principle of the present disclosure shall fall within the protection scope of the present disclosure.

## Claims

1. A battery, **characterized by** comprising a positive electrode plate, wherein the positive electrode plate comprises a positive electrode material, and the positive electrode material meets the following relationships:

$$1.3 \le I_{003}/I_{104} \le 3,\ 0.02 \le I_{006}/I_{003} \le 0.15,\ \text{and}\ 0.06 \le I_{006}/I_{104} \le 0.15;$$

wherein $I_{003}$ is intensity of a characteristic diffraction peak of a (003) crystal plane that is obtained from an XRD diffraction peak of a powder sample of the positive electrode material, $I_{104}$ is intensity of a characteristic diffraction peak of a (104) crystal plane that is obtained from the XRD diffraction peak of the powder sample of the positive

electrode material, and $I_{006}$ is intensity of a characteristic diffraction peak of a (006) crystal plane that is obtained from the XRD diffraction peak of the powder sample of the positive electrode material; and
the battery comprises an electrolyte solution, the electrolyte solution comprises a first additive, the first additive comprises a nitrile compound, and the electrolyte solution meets the following relational expression:

$$3\% \leq B \leq 6\%;$$

wherein B is a percentage of a mass of the nitrile compound in a total mass of the electrolyte solution.

2. The battery according to claim 1, **characterized in that** Dv50 of the positive electrode material ranges from 12 μm to 20 μm.

3. The battery according to claim 1, **characterized in that** a chemical formula of the positive electrode material is $Li_XCo_{1-y}M_yO_2$, wherein $0.9 \leq x \leq 1.1$, $0 \leq y \leq 0.1$, and M is selected from at least one of Al, Mg, Ti, Zr, Co, Ni, Mn, Y, La, Sr, W, Sc, Ta, or Nb.

4. The battery according to claim 1, **characterized in that** a surface of the positive electrode material is coated with a coating, a thickness of a coating layer formed by the coating is less than or equal to 50 nm, and a mass proportion of the coating is less than or equal to 5%; and/or
the coating comprises one or more of $Al_2O_3$, $TiO_2$, $ZrO_2$, MgO, $CoO_2$, CoO, NiO, $MnO_2$, $Mn_3O_4$,$NbO_3$, $Ta_2O_5$, $AlF_3$, $MgF_2$, $AlPO_3$, or $Li_3PO_3$.

5. The battery according to any one of claims 1 to 4, **characterized in that** the nitrile compound comprises a dinitrile compound and a trinitrile compound.

6. The battery according to any one of claims 1 to 5, **characterized in that** the nitrile compound comprises at least one of succinonitrile, glutaronitrile, adiponitrile, pimelonitrile, octandinitril, sebaconitrile, 1,3,6-hexanetricarbonitrile, 3-methoxypropionitrile, glycerol trinitrile, or 1,2-bis(2-cyanoethoxy)ethane.

7. The battery according to any one of claims 1 to 6, **characterized in that** the first additive comprises adiponitrile, and the electrolyte solution meets the following relational expression:

$$0.5\% \leq A \leq 3\%,$$

wherein A is a percentage of a mass of the adiponitrile in the total mass of the electrolyte solution.

8. The battery according to any one of claims 1 to 7, **characterized in that** the electrolyte solution further comprises a second additive, and the second additive is selected from at least one of compounds shown in Formula 1:

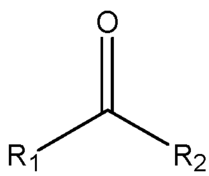
Formula 1,

wherein $R_1$ and $R_2$ are the same or different, and are independently selected from a 5- to 12-membered heteroaromatic group.

9. The battery according to claim 8, **characterized in that** $R_1$ and $R_2$ are the same or different, and are independently selected from a 5- to 6-membered heteroaromatic group.

10. The battery according to claim 8 or 9, **characterized in that** $R_1$ and $R_2$ are the same or different, and are independently selected from a pyrrolyl group, a pyrazolyl group, an imidazolyl group, a pyridyl group, a dazyl group, or a pyrimidinyl group.

11. The battery according to any one of claims 8 to 10, **characterized in that** the second additive comprises a compound shown by A1:

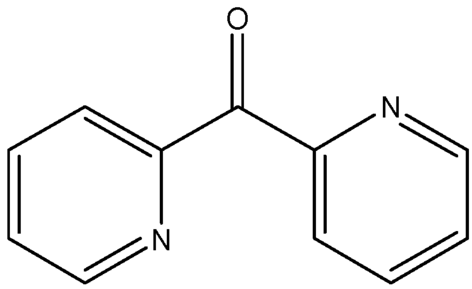

A1.

12. The battery according to any one of claims 8 to 11, **characterized in that** a percentage of a mass of the second additive in the total mass of the electrolyte solution ranges from 0.1 wt% to 3 wt%.

13. The battery according to any one of claims 1 to 12, **characterized in that** the electrolyte solution further comprises a third additive, and the third additive is selected from one or more of vinylene carbonate, vinyl ethylene carbonate, fluoroethylene carbonate, ethylene sulphite, methylene methane disulfonate, ethylene sulfate, 1,3-propane sultone, or prop-1-ene-1,3-sultone; and/or,
a percentage of a mass of the third additive in the total mass of the electrolyte solution ranges from 0.1 wt% to 15.0 wt%.

14. The battery according to claim 1, **characterized in that** the electrolyte solution further comprises lithium salts, and a percentage of a mass of the lithium salts in the total mass of the electrolyte solution ranges from 10 wt% to 20 wt%.

15. The battery according to claim 1, **characterized in that** an operation cut-off voltage of the battery is greater than or equal to 4.48 V.

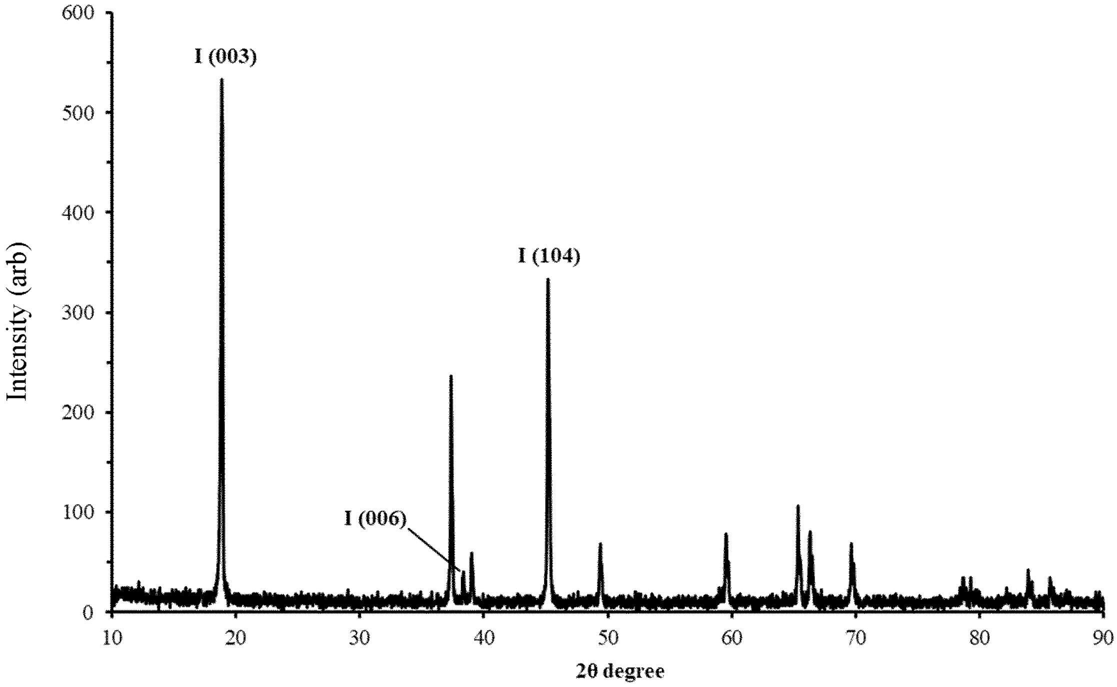
600
500
400
300
200
100
0
Intensity (arb)
I (003)
I (104)
I (006)
10
20
30
40
50
60
70
80
90
2θ degree

FIG. 1

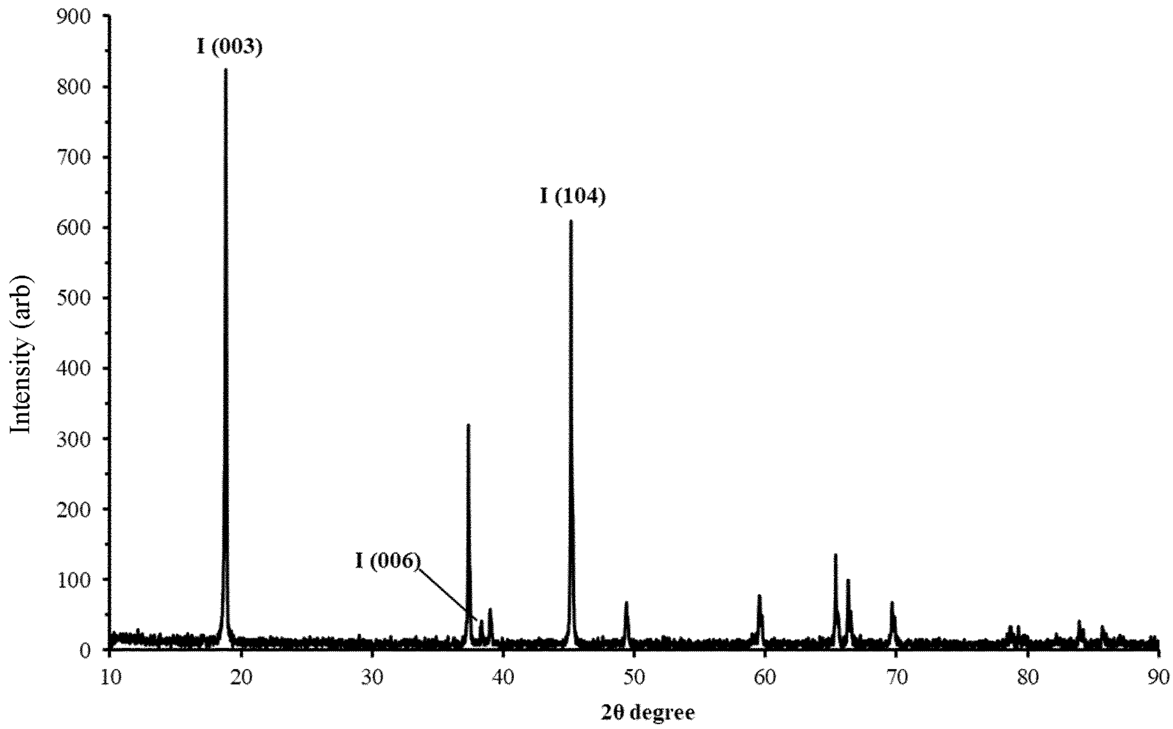
900
800
700
600
500
400
300
200
100
0
Intensity (arb)
I (003)
I (104)
I (006)
10
20
30
40
50
60
70
80
90
2θ degree

FIG. 2

**INTERNATIONAL SEARCH REPORT**

International application No.
**PCT/CN2023/125225**

**A. CLASSIFICATION OF SUBJECT MATTER**

H01M4/525(2010.01)i； H01M10/0567(2010.01)i； H01M4/62(2006.01)i； H01M10/0525(2010.01)i； H01M10/42(2006.01)i

According to International Patent Classification (IPC) or to both national classification and IPC

**B. FIELDS SEARCHED**

Minimum documentation searched (classification system followed by classification symbols)

IPC:H01M4/-, H01M10/-

Documentation searched other than minimum documentation to the extent that such documents are included in the fields searched

Electronic data base consulted during the international search (name of data base and, where practicable, search terms used)

CNTXT, DWPI, WPABS, ENTXT, VEN, CNKI, STN: 电池, 正极片, 电解液, 电解质, 衍射, 晶面, "104", "003", "006", 二腈, 腈, 己二腈, 吡啶, 酮, 双键, battery, XRD, positive electrode, electrolyte, dicyanobutane, pyridyl, ketone, 19437-26-4

**C. DOCUMENTS CONSIDERED TO BE RELEVANT**

| Category* | Citation of document, with indication, where appropriate, of the relevant passages | Relevant to claim No. |
|---|---|---|
| PX | CN 115995553 A (ZHUHAI COSMX BATTERY CO., LTD.) 21 April 2023 (2023-04-21) description, paragraphs 5-40 | 1-15 |
| Y | CN 115148985 A (ECOPRO BM CO., LTD.) 04 October 2022 (2022-10-04) description, paragraphs 161-166, 195-197, and 214 | 1-15 |
| Y | WO 2022205661 A1 (NINGDE AMPEREX TECHNOLOGY LTD.) 06 October 2022 (2022-10-06) description, paragraphs 7, 50, and 119-121 | 1-15 |
| Y | CN 108242556 A (NINGDE CONTEMPORARY AMPEREX TECHNOLOGY CO., LTD.) 03 July 2018 (2018-07-03) claims 1-10 | 1-15 |
| Y | WO 2021135921 A1 (SHENZHEN CAPCHEM TECHNOLOGY CO., LTD.) 08 July 2021 (2021-07-08) embodiments 1-7 | 1-15 |
| A | CN 105938917 A (SHENZHEN ZHENHUA NEW MATERIAL CO., LTD. et al.) 14 September 2016 (2016-09-14) claims 1-22 | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 January 2024** | **12 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2023/125225

C. DOCUMENTS CONSIDERED TO BE RELEVANT

| Category* | Citation of document, with indication, where appropriate, of the relevant passages | Relevant to claim No. |
|---|---|---|
| A | JP 2004288398 A (SANYO ELECTRIC CO., LTD.) 14 October 2004 (2004-10-14) claims 1-2 | 1-15 |

Form PCT/ISA/210 (second sheet) (July 2022)

**INTERNATIONAL SEARCH REPORT**
**Information on patent family members**

International application No.
**PCT/CN2023/125225**

| Patent document cited in search report | | | Publication date (day/month/year) | Patent family member(s) | | | Publication date (day/month/year) |
|---|---|---|---|---|---|---|---|
| CN | 115995553 | A | 21 April 2023 | None | | | |
| CN | 115148985 | A | 04 October 2022 | EP | 4183749 | A1 | 24 May 2023 |
| | | | | KR | 20220135707 | A | 07 October 2022 |
| | | | | US | 2022320506 | A1 | 06 October 2022 |
| | | | | JP | 2022159119 | A | 17 October 2022 |
| | | | | JP | 7356532 | B2 | 04 October 2023 |
| WO | 2022205661 | A1 | 06 October 2022 | None | | | |
| CN | 108242556 | A | 03 July 2018 | WO | 2018120794 | A1 | 05 July 2018 |
| WO | 2021135921 | A1 | 08 July 2021 | None | | | |
| CN | 105938917 | A | 14 September 2016 | KR | 20180003983 | A | 10 January 2018 |
| | | | | US | 2018006302 | A1 | 04 January 2018 |
| | | | | US | 10541414 | B2 | 21 January 2020 |
| JP | 2004288398 | A | 14 October 2004 | JP | 4169615 | B2 | 22 October 2008 |

Form PCT/ISA/210 (patent family annex) (July 2022)